# EUROPEAN PATENT SPECIFICATION

(11) **EP 1 147 946 B1**
(45) Date of publication and mention of the grant of the patent: **08.10.2003**
(21) Application number: 01108268.2
(22) Date of filing: 02.04.2001
(51) Int. Cl.: B60R 21/06, B60R 21/08

(54) **A safety net arrangement for a bunk in a truck cab**
Sicherheitsnetz für das Kabinenbett eines LKW's
Dispositif de filet de sécurité pour couchette de cabine de camion

(30) Priority: 07.04.2000 SE 0001286
(43) Date of publication of application: 24.10.2001
(73) Proprietor: Klippan Automotive Holding AB, 264 21 Klippan (SE)
(72) Inventor: Bengtsson, Ulf, 281 48 Hässleholm (SE); Hakansson, Anders, 264 93 Klippan (SE)
(74) Representative: Petri, Stellan

(56) References cited:
- EP-A- 1 069 031
- GB-A- 1 574 909
- US-A- 3 695 698
- US-A- 4 141 093

## Description

### Technical Field

The present invention relates to a safety net arrangement for a bunk or the like in a cab of a truck or the like, a safety net thereof being suspended substantially vertically in use.

### Background of the Invention

A modern cab for a large truck or the like is normally provided with at least one bunk in a cab space behind the driver's seat. The bunk is meant to allow a second driver to sleep or rest, while a first driver is driving the truck, so that stops on a long journey can be kept at a minimum.

The bunk has to be provided with a safety net arrangement of the kind mentioned initially, so that both the person in the bunk and the driver in front of him are reasonably protected in the event of a collision or the like.

In earlier designs the safety net has normally been held up in its protective position by means of elastic straps or the like, preferably arranged at the safety belts. When not used the net can be held down towards the bunk edge-by means of for example bands. Experience shows that the use of nets of this kind is somewhat awkward and that objects may be entangled with the net. Further, the appearance is not especially good.

In a recent design according to Swedish Patent Application No 9902702-1, the bunk has a longitudinal cartridge at its free edge for storing the safety net in a rolled condition when not used.

A safety net arrangement according to the preamble of claim 1 is known from US 3 695 698 A.

### The Invention

An alternative solution without the drawbacks mentioned above is according to the invention attained in that net belts extend from the net under the bunk and are attached at the back wall of the cab and in that means are provided for withdrawing the net under the bunk, when the net is released from its suspension.

The net is preferably attached at its sides to the two net belts, at its forward end to a net tube, to which the net belts are fastened, and at its backward end to a cross bar, fastened to the net belts.

The means for withdrawing the net under the bunk is preferably an elastic cord, which is drawn from the backward end of the net over two wheel devices at the back wall of the cab.

These wheel devices are preferably mounted to a net bracket to be mounted to the back wall of the cab.

The net bracket may at each end be provided with a short belt length with an end attachment for its mounting to the back wall of the cab.

In the case of a collision the net bracket may function as a deformation zone.

The solution according to the invention is rather simple and cheap while fulfilling the safety demands, and the safety net will be kept completely hidden and out of the way when not in use.

### The Drawings

The invention will be described in further detail below reference being made to the accompanying drawings, in which

Fig 1 is a perspective view of a safety net arrangement according to the invention.

Fig 2 is a top plan view of the arrangement according to Fig 1 with certain parts omitted,

Fig 3 is a detail section to a larger scale through a link wheel device in the arrangement of Figs 1 and 2, and

Fig 4 is a sketch of how a cord is laid around the link wheel devices of the arrangement.

### Detailed Description of a Preferred Embodiment

A safety net arrangement according to the invention is intended for a bunk or the like behind the front seats of a truck or the like.

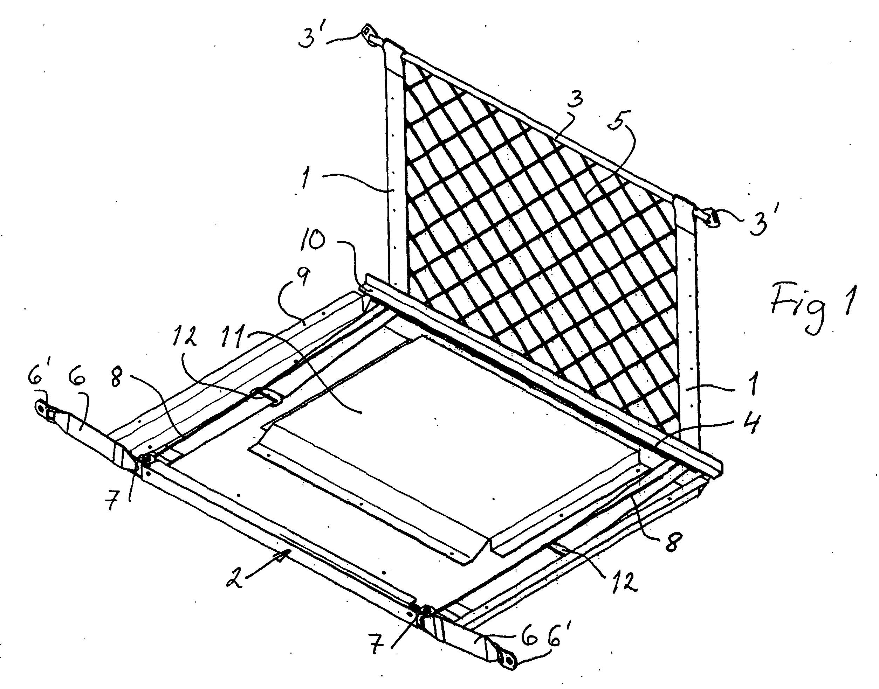

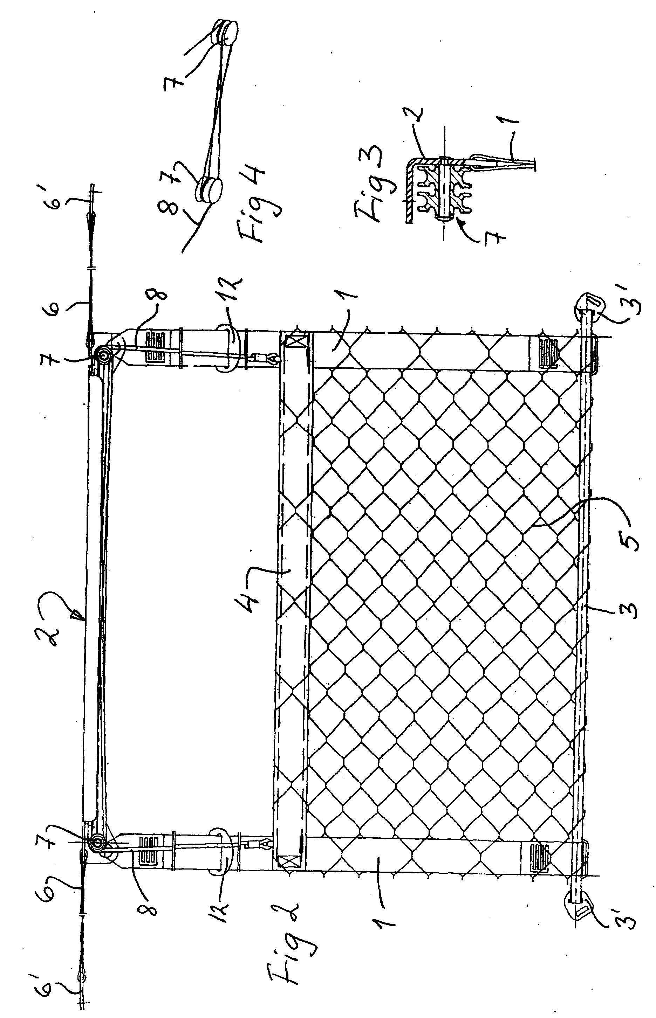

Two net belts 1 (of the same general type as safety belts in cars) are attached at one of their ends to a net bracket 2 and are at their other ends laid around and attached to a net tube 3. At an intermediate position the two belts 1 are interconnected by means of a cross bar 4. A safety net 5 is attached around the belts 1, the net tube 3 and the cross bar 4, as appears in Figs 1 and 2.

In the truck cab the net bracket 2 may be attached to a back wall ot the cab by means of short belt lengths 6 with end attachments 6'.

The net tube 3 is at its end provided with attachments 3' for connection to means in the cab for suspending the net tube 3 and thus the net 5 in a position to be described.

A link wheel device 7 - shown in more detail in Fig 3 - is attached to the net bracket 2, preferably at its end close to the attachment of the belt 1. An elastic means in the form of an elastic cord 8 is at each of its ends connected to the cross bar 4 and is laid over the (for example two) independently rotatable link wheels of the wheel device 7, for example in a pattern as shown in Fig 4, so that the cord 8 may be extended for a purpose to be described.

In Fig 1 certain further parts are shown. The bunk itself, for which the safety net arrangement is intended, is not shown, only a type of a cartridge arrangement 9 to be attached to the underside of the bunk. This arrangement 9 is at its front end provided with a link strip 10, which when mounted to a bunk is at or near the lower front edge thereof. The cartridge 1 is in the shown case provided with a box 11 containing a table, which may be extended under the bunk.

With the cartridge arrangement 9 attached to the underside of a bunk and the net bracket 2 fastened to the back wall of the truck cab, the safety net 5 may be pulled out against the force of the elastic cord 8 from its not shown, stored position under the bunk with the net tube 3 at the front edge of the bunk. The net is stored immediately under the bunk, i e between the bottom of the bunk and the table box 11. The net 5 is pulled out and up, until the belts 1 are fully extended, as shown in Fig 1, whereupon the net tube attachments 3' are attached to non-elastic suspension means (not shown). The net 5 will assume the shown vertical position preventing objects or human beings in the bunk from leaving it. The result will be that forces acting on the net 5 will be transmitted via the belts 1 to the net bracket 2 (and further to the back wall of the cab, to which it is attached) and to the suspended net tube 3. The net bracket 2 will accordingly act as a deformation zone.

When released at the net tube attachments 3' the net 5 will be pulled in under the bunk by means of the elastic cord 8, until the net tube 3 reaches the front bunk edge; and the belts 1 will during this movement be guided by the link strip 10. The hereby necessary folding of the belts 1 will be facilitated by belt guides 12.

The elastic cord 8 must have such a length and elasticity that the net 5 can be fully extended and retracted as described.

As an alternative to the elastic cord 8 or a similar elastic means, an electric motor for the withdrawal of the safety net under the bunk can be used.

## Claims

1. A safety net arrangement for a bunk or the like in a cab of a truck or the like, a safety net (5) thereof being suspended substantially vertically in use, **characterized in that** net belts (1) extend from the net (5) under the bunk and are attached at the back wall of the cab and **in that** means (8) are provided for withdrawing the net under the bunk, when the net is released from its suspension.

2. An arrangement according to claim 1, **characterized in that** the net (5) is attached at it sides to the two net belts (1), at its forward end to a net tube (3), to which the net belts are fastened, and at its backward end to a cross bar (4), fastened to the net belts (1).

3. An arrangement according to claim 2, **characterized in that** the net tube (3) at its ends is provided with attachments (3') for connection to means in the cab for suspending the net tube and thus the net (5).

4. An arrangement according to claim 1, **characterized in that** elastic means (8) are provided between the net (5) and a point under the bunk for withdrawing the net under the bunk.

5. An arrangement according to claim 4, **characterized in that** an elastic cord (8) is drawn from the backward end of the net (5) over two wheel devices (7) at the back wall of the cab.

6. An arrangement according to claim 5, **characterized in that** the wheel devices (7) are mounted to a net bracket (2) to be mounted to the back wall of the cab.

7. An arrangement according to claim 6, **charac-terized in that** the net bracket (2) at each of its ends is provided with a short belt length (6) with an end attachment (6') for its mounting to the back wall of the cab.

## Patentansprüche

1. Sicherheitsnetzvorrichtung für eine Koje oder dergleichen in einer Lkw-Kabine oder dergleichen, deren Sicherheitsnetz (5) beim Gebrauch im wesentlichen vertikal aufgehängt ist, **dadurch gekennzeichnet, daß** Netzgurte (1) sich ausgehend von dem Netz (5) unterhalb der Koje erstrecken und an der Rückwand der Kabine angebracht sind, und daß Mittel (8) vorgesehen sind, mit deren Hilfe das Netz unter die Koje zurückgezogen wird, wenn das Netz von der Aufhängung befreit ist.

2. Vorrichtung nach Anspruch 1, **dadurch gekennzeichnet, daß** das Netz (5) mit seinen Seiten an zwei Netzgurten (1) und mit seinem vorderen Ende an einem Netzrohr (3) angebracht ist, wobei an letzterem die Netzgurte befestigt sind, und daß das Netz an seinem hinteren Ende an einem Querstab (4) befestigt ist, der an den Netzgurten (1) befestigt ist.

3. Vorrichtung nach Anspruch 2, **dadurch gekennzeichnet, daß** das Netzrohr (3) an seinen Enden mit Befestigungen (3') ausgestattet ist zur Verbindung mit den Mitteln innerhalb der Kabine, mit denen das Netzrohr und mithin das Netz (5) aufgehängt wird.

4. Vorrichtung nach Anspruch 1, **dadurch gekennzeichnet, daß** elastische Mittel (8) zwischen dem Netz (5) und einer Stelle unterhalb der Koje vorgesehen sind, um das Netz unter die Koje zurückzuziehen.

5. Vorrichtung nach Anspruch 4, **dadurch gekennzeichnet, daß** eine elastische Kordel (8) von dem hinteren Ende des Netzes (5) über zwei Radvorrichtungen (7) an der Rückwand der Kabine gezogen ist.

6. Vorrichtung nach Anspruch 5, **dadurch gekennzeichnet, daß** die Radvorrichtungen (7) an einem Netzträger (2) montiert sind, der an der Rückwand der Kabine anzubringen ist.

7. Vorrichtung nach Anspruch 6, **dadurch gekennzeichnet, daß** der Netzträger (2) an jedem seiner Enden mit einem kurzen Gurtstück (6) mit einer Befestigung (6') für seine Anbringung an der Rückwand der Kabine ausgestattet ist.

## Revendications

1. Dispositif de filet de sécurité pour une couchette ou analogue dans une cabine de camion ou analogue, un filet de sécurité (5) étant suspendu verticalement à l'utilisation, **caractérisé en ce que** des sangles de filet (1) s'étendent depuis le filet (5) sous la couchette et sont fixées à la paroi arrière de la cabine, et **en ce qu'**un moyen (8) est prévu pour rétracter le filet sous la couchette, lorsque le filet n'est plus suspendu.

2. Agencement selon la revendication 1, **caractérisé en ce que** le filet (5) est attaché sur ses côtés aux deux sangles de filet (1), à son extrémité avant à un tube de filet (3), auquel les'sangles de filet sont fixées, et à son extrémité arrière à une barre transversale (4), fixée aux sangles de filet (1).

3. Agencement selon la revendication 2, **caractérisé en ce que** le tube de filet (3) est doté à ses extrémités de fixations (3') aux fins de connexion à des moyens dans la cabine pour suspendre le tube de filet et donc le filet (5).

4. Agencement selon la revendication 1, **caractérisé en ce qu'**un moyen élastique (8) est prévu entre le filet (5) et un point sous la couchette pour rétracter le filet sous la couchette.

5. Agencement selon la revendication 4, **caractérisé en ce qu'**une corde élastique (8) est tirée depuis l'extrémité arrière du filet (5) sur deux dispositifs à roues (7) à la paroi arrière de la cabine.

6. Agencement selon la revendication 5, **caractérisé en ce que** les dispositifs à roues (7) sont montés sur une console de filet (2) devant être montée à la paroi arrière de la cabine.

7. Agencement selon la revendication 6, **caractérisé en ce que** la console de filet (2) à chacune de ses extrémités est dotée d'une courte longueur de sangle (6) avec une fixation d'extrémité (6') pour son montage à la paroi arrière de la cabine.
